Europäisches Patentamt

European Patent Office

Office européen des brevets

(11) Publication number: **0 336 628**
**A2**

# EUROPEAN PATENT APPLICATION

(21) Application number: **89303045.2**

(22) Date of filing: **28.03.89**

(51) Int. Cl.⁴: **H04N 13/00**

(30) Priority: **31.03.88 GB 8807723**

(43) Date of publication of application:
**11.10.89 Bulletin 89/41**

(84) Designated Contracting States:
**DE ES FR GB IT**

(71) Applicant: **SCHAFLINE LIMITED**
**31 Princes Street**
**Liverpool L2 5RG(GB)**

(72) Inventor: **Sharp, James Brian**
**29 Darby Road**
**Liverpool L19 9BP(GB)**

(74) Representative: **Stringer, David Hiram et al**
**W.P. THOMPSON & CO Coopers Building**
**Church Street**
**Liverpool L1 3AB(GB)**

(54) **Improvements relating to 3-dimensional viewing of moving pictures.**

(57) The present specification discloses a system for producing a three-dimensional picture, the system comprising two television monitors (1,3) being connected to a respective camera (5,7) arranged to view the same scene from a slightly different aspect. The television monitors (1,3) are arranged adjacent to each other and a viewer uses a viewing device (13) to simultaneously watch both pictures. The viewing device (13) takes the form of a pair of spectacles with lenses (15,17) which limit the vision of each eye to a different television monitor (3,1), the viewer's brain comprising the two pictures to form a three-dimensional viewed picture. Preferably the lenses (15,17) are polarised to each match with the polarisation of a respective television monitor (3,1) to thus positively limit the vision of each eye.

Fig 1

## IMPROVEMENTS RELATING TO 3-DIMENSIONAL VIEWING OF MOVING PICTURES

The present invention relates to a system of 3-dimensional viewing of moving pictures.

The idea of producing 3-dimensional pictures both stationary and moving to provide depth to the picture and the impression that the viewer is actually part of the picture being viewed, has been pursued for a long time. It has met with more commercial success with regard to stationary pictures i.e. printed matter in, for example, magazines and comics, than with moving pictures i.e. films. However the system for producing and viewing the pictures, whether moving or stationary, has been substantially the same. Basically the picture or film comprises two stereoscopic, different colour images with the viewer wearing a pair of spectacles comprising two different colour filters, so that each eye views a different image, thus giving the depth of field and 3-D effect.

The desire for 3-dimensional television has more recently been pursued. However this has led to complex and expensive equipment where, for example, a viewer again wears a pair of special spectacles which are electrically coupled to the television, the television picture alternating at a fast speed between two different images from slightly different aspects, with electrical impulses fed to the spectacles allowing one spectacle lens to transmit one image and the other lens to transmit the other image, in sequence, to thus produce an in-depth 3-D composite picture to the viewer. Variations on this theme are being developed, but expensive equipment and an undesirable electrical connection with special spectacles is required.

The aim of the present invention is to provide a simple and relatively cheap system for producing and viewing 3-Dimension television pictures.

According to one aspect of the present invention there is provided a viewing device for restricting each eye of a viewer to actually see solely one picture, with each eye viewing a different picture.

In one embodiment of said one aspect of the present invention the viewing device is a pair of spectacles comprising a pair of lenses which are adapted to provide diverging lines of vision at infinity. Each lens can, for example, be wedge-shaped with one lens arranged to allow one eye of a viewer to only see a particular region e.g., television screen, and the other lens arranged to allow the other eye of the viewer to only see another region e.g. another television screen. The regions may be one above the other or side-by-side. Preferably the lenses are polarised by, for example, a polarising coating with like polarised screens or coatings being located in front of the regions i.e. television screens, being viewed. Preferably the lenses are oppositely polarised i.e. at 90° to each other. In this way it is impossible for one eye to view anything but the correct region.

According to a further feature of the present invention there is provided a system for producing and viewing 3-dimensional television pictures, said system comprising means for producing two separate television pictures of the same scene from different aspects, said pictures being located adjacent to each other, and means for restricting each eye of a viewer to actually see solely one picture, with each eye viewing a different picture.

In one embodiment of the present invention two television monitors are located one on top of the other, each monitor being fed with a signal from a respective television camera. The two television cameras, in use, scan the same scene from slightly different aspects and thus each monitor has a slightly different picture. The respective screens of the two monitors are covered by differently polarised screens. Preferably the polarised screens are oppositely polarised. To thus obtain the required 3-dimensional effect, a viewer wears a pair of spectacles according to said one aspect of the present invention, and formed by two spaced-apart differently polarised lenses, the polarisation of one lens corresponding to the polarisation of the polarised screen located over the screen of one monitor, and the polarisation of the other lens corresponding to the polarisation of the polarised screen located over the screen of the other monitor. The viewer is thus restricted to looking at one television monitor with one eye and the other television monitor with the other eye, the brain combining the images to produce the desired 3-dimensional effect. To facilitate viewing, the spectacle lenses are each in the form of prisms which are arranged to effectively align the pictures of the superposed television monitors.

In a modified form of the above described embodiment, the television monitors are positioned side-by-side and the prismatic spectacle lenses are positioned to align the pictures with respect to a viewer's eyes. As opposed to having two television monitors, a single television monitor may be used, suitably modified to produce two pictures, one from each television camera, either one above the other or side-by-side on the same television screen. A polarised screen with two differently polarised regions corresponding to the picture regions, must then be used.

Whilst the above embodiments use polarisation to prevent any one eye of a viewer from straying to view the picture which is to be viewed by the other eye of the viewer, it is possible to omit the polarised screens and lenses, and to merely use the spectacles designed to allow any one eye to view solely the picture which it is intended to view. In this case, the spectacle lenses are oppositely positioned prisms, or to reduce the thickness of the lenses and still produce the desired effect, each lens can be a thin planar sheet of, for example, transparent plastics material with a series of parallel wedges or prismatic shapes formed on one surface. This is similar to a Fresnel lens but without the magnifying effect.

The present invention thus provides a simple system for producing a 3-dimensional television picture, with no electrical connection required between the spectacles and television equipment.

The present invention will now be further described, by way of example, with reference to the accompanying drawings, in which:-

Fig. 1 is a schematic representation of one embodiment of a system constructed according to the present invention;

Fig. 2 is a diagrammatic representation of the image seen by a viewer;

Fig. 3 is a schematic representation of a modified form of the embodiment of Fig. 1;

Fig. 4 is a schematic representation of another embodiment of a system constructed according to the present invention;

Fig. 5 is a schematic representation of a modified form of the embodiment of Fig. 4; and

Fig. 6 is a cross-sectional view through a lens for use in the system of the present invention.

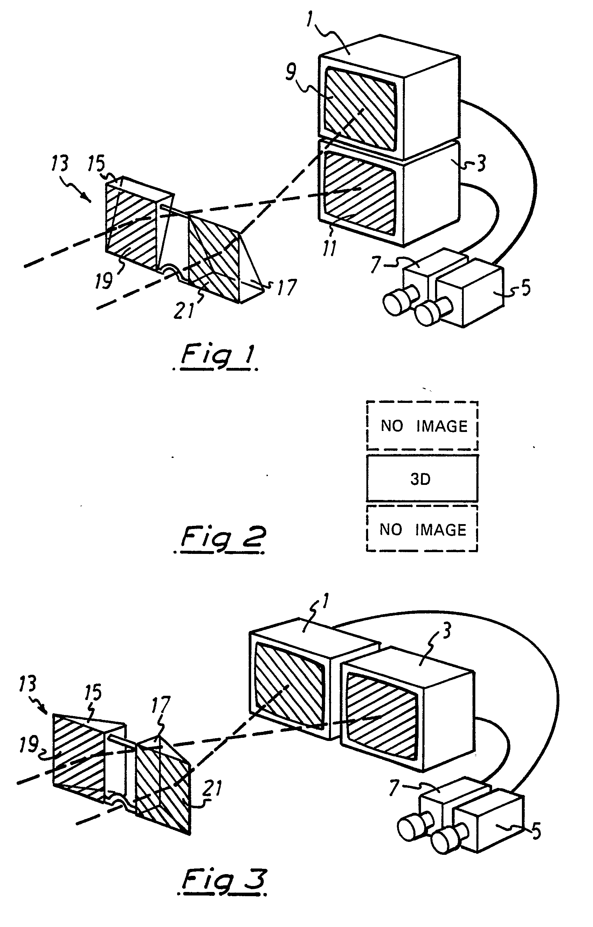

In the embodiment of the present invention illustrated in Fig. 1 of the accompanying drawings, two television monitors 1 and 3 are arranged with monitor 1 on top of monitor 3. Each monitor 1, 3 connects with a respective television camera 5, 7 each camera, in use, scanning the same scene from a slightly different aspect. Thus the pictures shown on each monitor are slightly different from each other. The screen of each television monitor 1, 3 is, covered by a polarising screen 9, 11, the polarising screens 9, 11 being oppositely polarised with respect to each other. Alternatively, if desired, the polarising screens 9, 11 can just be differently polarised, i.e., not 90° out of phase.

To view the polarised pictures on the monitors 1, 3, and obtain the desired 3-dimensional effect, a viewer must wear a viewing device in the form of a pair of spectacles 13 comprised of two spaced-apart prismatic lenses 15, 17. The lenses 15, 17 are each in the form of a wedge-like prism with the prisms oppositely oriented so as to in effect align the monitor pictures and produce a composite 3-dimensional effect picture in the brain - see Fig. 2. As seen in Fig. 1, the left-hand prism 15 effectively directs a viewer's left eye to the lower television monitor 3, and the right-hand prism 17 effectively directs a viewer's right eye to the upper monitor 1. To positively prevent the left eye from viewing the upper monitor 1 and the right eye from viewing the lower monitor, the left-hand prism 15 has a polarised coating 19 which is of the same polarisation as the polarising screen 11 over the lower monitor 3, and the right-hand prism 17 has a polarised coating 21 which is of the same polarisation as the polarising screen 9 over the upper monitor 1.

A modified form of the embodiment of Fig. 1 is schematically illustrated in Fig. 3 of the accompanying drawings, and like reference numerals are used for parts of the embodiment of Fig. 3 equivalent to parts of the embodiment of Fig. 1. The sole difference lies in the location of the television monitors 1, 3 side-by-side, with the wedge-shaped primsatic lenses 15, 17 of the viewing device, re-arranged to cater for the new relative positioning of the television monitors 1, 3.

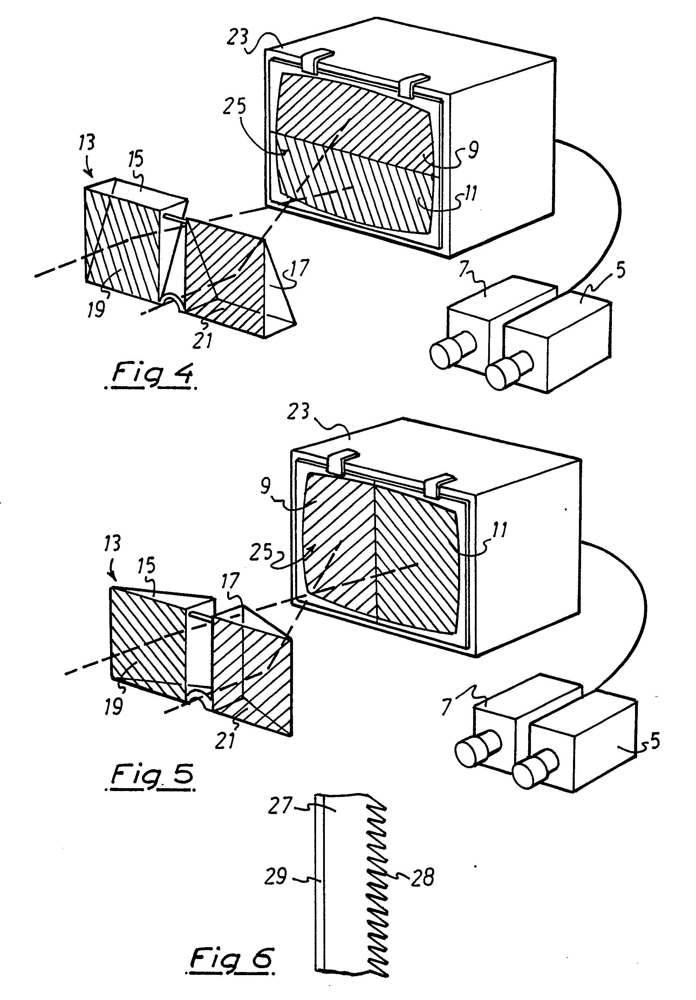

Another embodiment of the present invention is illustrated substantially in Fig. 4 of the accompanying drawings and like reference numerals are again used for parts of this embodiment which are equivalent to parts of the embodiments of Figs. 1 and 3. Basically the difference between the embodiment of Fig. 1 and the embodiment of Fig. 4 lies in the fact that a single television monitor 23 replaces the previous two monitors 1, 3, the single monitor 23 being adapted to produce the two pictures from the cameras 5, 7 on the same screen with the television screen being covered by a polarising screen 25 with two oppositely polarised regions corresponding to screens 9 and 11. Whilst the television screen of the embodiment of Fig. 4 is split horizontally, the embodiment of Fig. 5 is split vertically.

In all of the above described embodiments of the present invention, the spectacles 13 have a pair of wedge-shaped prismatic lenses. However, whilst such lenses provide the desired effect, they can be bulky and expensive and it is proposed to use lenses formed from a planar sheet 27 of transparent plastics material (see Fig. 6) with a series of parallel wedge-shaped ridges 28 extending over one of the surfaces of the planar sheet 27 similar to a Fresnel lens but without the magnifying effect produced by curved ridges. By suitably arranging such lenses the desired effect can be achieved, i.e. the eyes can view different pictures to thus obtain the 3-dimensional effect. Further, a polarising coating 29 can be applied to these lenses to correspond respectively with coatings or screens located over the television monitor.

As shown in Fig. 4 and Fig. 5, if a suitable signal is passed to an existing television monitor 23, which produces a split screen, i.e. double picture, then the polarising screen 25 with the two differently polarised regions 9, 11 can be formed as a unit which is merely clipped onto the front of the existing monitor. In this case the polarising screen 25 and spectacles 13 could be purchased as a kit for use in viewing a special signal received on, for example, a specific television channel or video recording. Thus, when this specific 3-dimensional channel or video recording was to be viewed the polarising screen 25 could be mounted and the spectacles 13 used.

The present invention thus provides a simple and cheap system for producing and viewing a 3-dimensional television picture.

## Claims

1. A viewing device for restricting each eye of a viewer to actually see solely one picture of two side by side pictures, with each eye viewing a different picture, characterised by a pair of lenses (19,21) adapted to provide diverging lines of vision at infinity.

2. A device as claimed in claim 1, in which each lens (19,21) is wedge-shaped.

3. A device as claimed in claim 1, in which each lens (19,21) is formed with a number of parallel wedge-shaped ridges on one face.

4. A device as claimed in claim 3, in which the ridges (28) are curved so that each lens (19,21) is a fresnel lens.

5. A device as claimed in any one of claims 1 to 4, in which the lenses (19,21) are each provided with a polarising coating (29).

6. A device as claimed in claim 5, in which each lens (19,21) is provided with a differently polarised coating (29).

7. A device as claimed in claim 6, in which the polarising coatings (29) for the respective lenses (19,21) are at 90° to each other.

8. A device as claimed in any one of the preceding claims, in which the lenses (19,21) are arranged to view pictures which are side by side in a horizontal plane.

9. A device as claimed in any one of claims 1 to 7, in which the lenses (19,21) are arranged to view pictures which are side by side in a vertical plane.

10. A system for producing and viewing 3-dimensional pictures, characterised by means (1,3;23) for producing two separate pictures of the same scene from different aspects, said pictures being located adjacent to each other, and viewing means (13) for restricting each eye of a viewer to actually see solely one picture, with each eye viewing a different picture.

11. A system as claimed in claim 10, in which said means for producing said pictures comprises two television monitors (1,3), each television monitor (1,3) being connected to a respective television camera (5,7).

12. A system as claimed in claim 10, in which said means for producing said pictures comprises a television monitor (23) with two different regions (9,11) of the television monitor screen being connected to respective television cameras (5,7).

13. A system as claimed in claim 11 or claim 12, in which said means (1,3;23) for producing pictures are arranged to produce pictures which are arranged side by side in the horizontal plane.

14. A system as claimed in claim 11 or claim 12, in which the means (1,3;23) for producing pictures are arranged to produce pictures which are side by side in the vertical plane.

15. A system as claimed in claim 11, in which a polarising screen (9,11) is provided in front of each television monitor (1,3), the screens (9,11) being differently polarised.

16. A system as claimed in claim 15, in which the polarising screen (9,11) is formed as a coating on the screen of each television monitor (1,3).

17. A system as claimed in claim 12, in which a polarising screen (9,11) is located in front of each different region of the television monitor screen, said polarising screens (9,11) being differently polarised.

18. A system as claimed in claim 17, in which each polarising screen (9,11) is formed as a coating.

19. A system as claimed in claim 10, in which said viewing means (13) comprises a viewing device for restricting each eye of a viewer to actually see solely one picture of two side by side pictures, with each eye viewing a different picture, the device (13) comprising a pair of lenses (19,21) adapted to provide diverging lines of vision at infinity.

20. A device as claimed in claim 19, in which each lens (19,21) is wedge-shaped.

21. A device as claimed in claim 19, in which each lens (19,21) is formed with a number of parallel wedge-shaped edges (28) on one face.

22. A device as claimed in claim 21, in which the ridges (28) are curved so that each lens (19,21) is a fresnel lens.

23. A device as claimed in any one of claims 19 to 22, in which the lenses (19,21) are each provided with a polarising coating (29).

24. A device as claimed in claim 23, in which each lens (19,21) is provided with a differently polarised coating (29).

25. A device as claimed in claim 24, in which the polarising coatings (29) for the respective lenses (19,21) are at 90° to each other.

26. A device as claimed in any one of the preceding claims, in which the lenses (19,21) are arranged to view pictures which are side by side in a horizontal plane.

27. A device as claimed in any one of claims 19 to 25, in which the lenses (19,21) are arranged to view pictures which are side by side in a vertical plane.

EP 0 336 628 A2

_Fig 1._

| NO IMAGE |
|:---:|
| 3D |
| NO IMAGE |

_Fig 2._

_Fig 3._

Fig 4

Fig 5

Fig 6